# EUROPEAN PATENT APPLICATION

(11) **EP 4 280 804 A1**
(43) Date of publication of application: **22.11.2023**
(21) Application number: 21919403.2
(22) Date of filing: 15.01.2021
(51) Int. Cl.: H04W 76/30, H04W 24/08

(54) **TERMINAL AND WIRELESS COMMUNICATION METHOD**

(71) Applicant: NTT DOCOMO, INC., Tokyo 100-6150 (JP)
(72) Inventor: HARADA, Kouhei, Tokyo 100-6150 (JP); HANAKI, Akihito, Tokyo 100-6150 (JP); MIN, Tianyang, Tokyo 100-6150 (JP)
(74) Representative: Hoffmann Eitle
(86) International application number: PCT/JP2021/001372
(87) International publication number: WO 2022/153510

(57) **Abstract**

A terminal transmits a report related to deactivation of the secondary cell group. When the terminal transmits the report, the terminal causes the secondary cell group to transition to an inactive state.

## Description

### [Technical Field]

The present disclosure relates to a terminal and radio communication method that support dual connectivity.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

In Release -17 of the 3 GPP, the expansion of Multi-RAT Dual Connectivity (MR-DC) is being studied. For example, the activation/deactivation mechanism (which may be referred to as SCG activation/deactivation) of the secondary cell group (SCG) is being studied mainly to reduce power consumption of terminals (User Equipment, UE).

### [Citation List]

### [Non-Patent Literature]

Non-Patent Literature 1 "New WID on further enhancements on Multi-Radio Dual-Connectivity", RP -193249, 3 GPP TSG RAN Meeting # 86, 3 GPP, December 2019

### [Summary of Invention]

It is assumed that the SCG is configured in a high frequency band such as FR2 (Frequency Range 2: 24.25 GHz to 52.6 GHz), but in such a high frequency band, it is assumed that failures of the SCG are more likely to occur in consideration of radio wave characteristics (straightness, etc.).

Therefore, if the network performs SCG release or SN release due to a failure of the SCG, it is assumed that a large amount of signaling will occur and that power consumption of the terminal will be adversely affected. Further, the occurrence of a data conduction stop section in which data cannot be transmitted and received is also a concern.

Accordingly, the following disclosure has been made in view of such a situation, and it is an object of the present invention to provide a terminal and a radio communication method capable of suppressing a signaling amount due to an SCG release or an SN release caused by a failure of an SCG, thereby reducing power consumption and improving reliability.

One aspect of the present disclosure is a terminal (UE 200) including a transmission unit (DC processing unit 230) that transmits a report related to deactivation of a secondary cell group; and a control unit (control unit 240) that, when the report is transmitted, causes the secondary cell group to transition to an inactive state.

One aspect of the present disclosure is a terminal (UE 200) including a transmission unit (DC processing unit 230) that transmits failure information of a secondary cell group, and a control unit (control unit 240) that, when the secondary cell group is determined to be a failure, causes the secondary cell group to transition to an inactive state regardless of the transmission of the failure information.

One aspect of the present disclosure is a radio communication method including the steps of transmitting, by a terminal, a report related to deactivation of a secondary cell group, and transitioning, by the terminal, the secondary cell group to an inactive state when the terminal transmits the report.

One aspect of the present disclosure is a radio communication method including the steps of transmitting, by a terminal, failure information of a secondary cell group and causing, by the terminal, the secondary cell group to transition to an inactive state regardless of the transmission of the failure information when the terminal determines that the secondary cell group has failed.

### [Brief Description of Drawings]

[FIG. 1] FIG. 1 is an overall schematic configuration diagram of radio communication system 10.
[FIG. 2] FIG. 2 is a functional block diagram of the eNB 100 A.
[FIG. 3] FIG. 3 is a functional block diagram of the UE 200.
[FIG. 4] FIG. 4 is a diagram showing a schematic communication sequence according to the operation example 1.
[FIG. 5] FIG. 5 is a diagram showing a schematic communication sequence according to operation example 2.
[FIG. 6] FIG. 6 is a diagram showing an example of a hardware configuration of the eNB 100 A, the gNB 100 B and the UE 200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

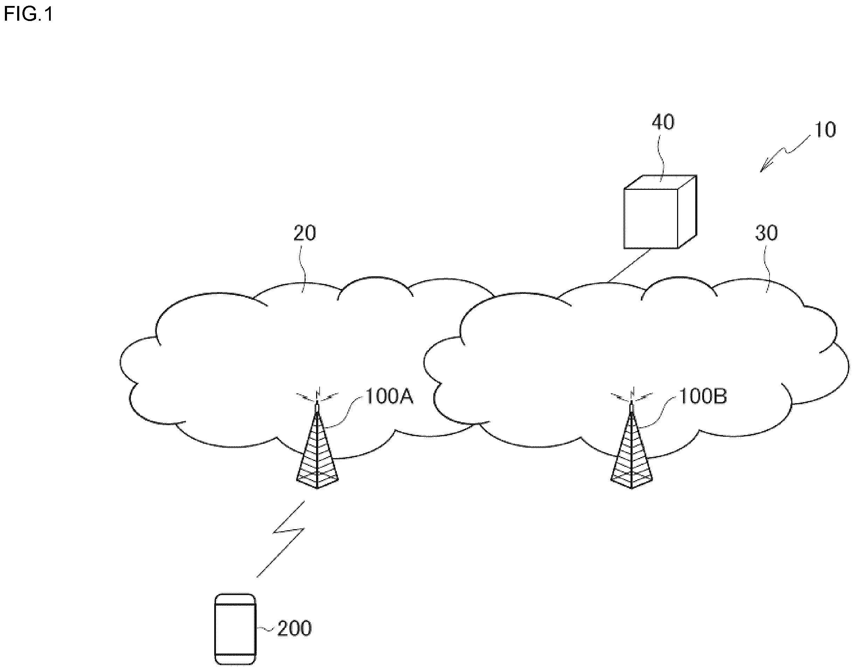

FIG. 1 is an overall schematic configuration diagram of a radio communication system 10 according to this embodiment. The radio communication system 10 is radio communication system according to Long Term Evolution (LTE) and 5G New Radio (NR). Note that LTE may be referred to as 4G and NR may be referred to as 5G. The radio communication system 10 may also be a radio communication system following a scheme called Beyond 5G, 5G Evolution or 6 G.

LTE and NR may be interpreted as radio access technologies (RAT), and in this embodiment, LTE may be referred to as a first radio access technology and NR may be referred to as a second radio access technology.

The radio communication system 10 includes the Evolved Universal Terrestrial Radio Access Network 20 (E-UTRAN 20) and the Next Generation-Radio Access Network 30 (hereinafter NG RAN 30). The radio communication system 10 also includes a terminal 200 (UE 200, User Equipment).

The E-UTRAN 20 includes an eNB 100 A which is a radio base station according to LTE. NG RAN 30 includes gNB 100 B which is a radio base station in accordance with 5 G (NR). The NG RAN 30 is connected to a User Plane Function 40 (hereinafter, UPF 40) which is included in the system architecture of 5G and provides user plane functions. The E-UTRAN 20 and the NG RAN 30 (which may be eNB 100 A or gNB 100 B) may simply be referred to as a network.

The eNB 100 A, the gNB 100 B, and the UE 200 can support carrier aggregation (CA) using a plurality of component carriers (CCs), dual connectivity for simultaneously transmitting component carriers between a plurality of NG-RAN nodes and the UE, and the like.

The eNB 100 A, gNB 100 B and UE 200 perform radio communication via a radio bearer, specifically, a Signalling Radio Bearer (SRB) or a DRB Data Radio Bearer (DRB).

In this embodiment, the eNB 100 A may configure the master node (MN) and the gNB 100 B may configure the secondary node (SN) by executing Multi-Radio Dual Connectivity (MR-DC), specifically E-UTRA-NR Dual Connectivity (EN-DC), or the gNB 100 B may configure the MN and the eNB 100 A may configure the SN by executing NR-E-UTRA Dual Connectivity (NE-DC). Alternatively, NR-NR Dual Connectivity (NR-DC) in which the gNB constitutes the MN and SN may be executed.

As described above, the UE 200 supports dual connectivity connecting the eNB 100 A and the gNB 100 B.

The eNB 100 A is included in the master cell group (MCG), and the gNB 100 B is included in the secondary cell group (SCG). That is, the gNB 100 B is an SN included in the SCG.

The eNB 100 A and gNB 100 B may be referred to as radio base stations or network devices.

In addition, radio communication system 10 may support the addition or change of Primary SCell (PSCell). The PSCell addition/change may include a conditional PSCell addition/change.

PSCell is a type of secondary cell. PSCell means Primary SCell (secondary cell), and it may be interpreted that any SCell among a plurality of SCells corresponds to it.

The secondary cell may be read as a secondary node (SN) or a secondary cell group (SCG).

The radio communication system 10 may also support conditional inter-SN PSCell change procedures. Specifically, MN-initiated conditional inter-SN PSCell change and/or SN-initiated conditional inter-SN PSCell change may be supported.

### (2)Function block configuration of radio communication system

Next, the functional block configuration of radio communication system 10 will be described. Specifically, the functional block configurations of the eNB 100 A and the UE 200 will be described.

### (2.1) eNB 100 A

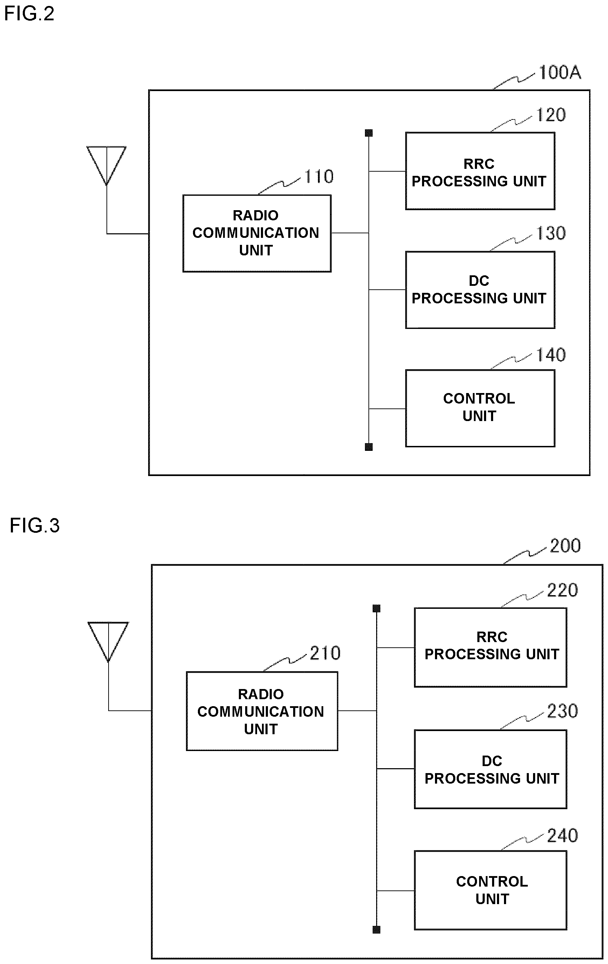

FIG. 2 is a functional block diagram of the eNB 100 A. As shown in FIG. 2, the eNB 100 A includes a radio communication unit 110, an RRC processing unit 120, a DC processing unit 130, and a control unit 140. Although the gNB 100 B also supports NR, it may have the same function as the eNB 100 A.

The radio communication unit 110 transmits a downlink signal (DL signal) in accordance with LTE. The radio communication unit 110 receives an uplink signal (UL signal) in accordance with LTE.

The RRC processing unit 120 executes various processes in the radio resource control layer (RRC). Specifically, the RRC processing unit 120 can transmit the RRC Reconfiguration to the UE 200. The RRC processing unit 120 can receive the RRC Reconfiguration Complete, which is a response to the RRC Reconfiguration, from the UE 200.

In this embodiment, the eNB 100 A supports LTE, but in this case, the name of the RRC message may be RRC Connection Reconfiguration or RRC Connection Reconfiguration Complete.

The DC processing unit 130 executes processing related to dual connectivity, specifically, Multi-RAT Dual Connectivity (MR-DC). In this embodiment, since the eNB 100 A supports LTE and the gNB 100 B supports NR, the DC processing unit 130 may execute processing related to E-UTRA-NR Dual Connectivity (EN-DC). The type of DC is not limited as described above, and may correspond to, for example, NR-E-UTRA Dual Connectivity (NE-DC) or NR-NR Dual Connectivity (NR-DC) .

The DC processing unit 130 can transmit/receive a message specified in the 3 GPP TS 37.340 or the like, and execute processing related to setting and releasing DC between the eNB 100 A, the gNB 100 B and the UE 200.

The control unit 140 controls each functional block constituting the eNB 100 A. In particular, in this embodiment, the control unit 140 performs control regarding the addition or modification of a secondary cell (which may be a secondary node).

Specifically, the control unit 140 can perform control regarding the addition or modification of the secondary node (SN) based on, for example, a Measurement Report from the UE 200.

The control unit 140 can also perform SCG activation/deactivation of the secondary cell group (SCG). Note that deactivation may be replaced by other synonymous terms such as suspension.

Specifically, the control unit 140 may activate (may be referred to as activating) or deactivate (may be referred to as deactivating) the SCG. More specifically, control unit 140 may activate or deactivate one or more SCells (May contain PSCell) contained in the SCG.

An active SCG (SCell) may be interpreted as a state in which the UE 200 can immediately use the SCG (SCell). The inactive SCG (SCell) may be interpreted as a state in which the UE 200 cannot immediately use the SCG (SCell), but the setting information is retained.

In this embodiment, the channel includes a control channel and a data channel. The control channels include PDCCH (Physical Downlink Control Channel), PUCCH (Physical Uplink Control Channel), PRACH (Physical Random Access Channel), PBCH (Physical Broadcast Channel), and the like.

The data channels include PDSCH (Physical Downlink Shared Channel) and PUSCH (Physical Uplink Shared Channel).

The reference signals include a Demodulation reference signal (DMRS), a Sounding Reference Signal (SRS), a Phase Tracking Reference Signal (PTRS), and a Channel State Information-Reference Signal (CSI-RS). The data may refer to data transmitted via a data channel.

### (2.2)UE 200

FIG. 3 is a functional block diagram of the UE 200. As shown in FIG. 3, the UE 200 includes a radio communication unit 210, an RRC processing unit 220, a DC processing unit 230, and a control unit 240.

The radio communication unit 210 transmits an uplink signal (UL signal) in accordance with LTE or NR. The radio communication unit 210 receives a downlink signal (DL signal) in accordance with LTE. That is, the UE 200 can access the eNB 100 A (E-UTRAN 20) and the gNB 100 B (NG RAN 30), and can support dual connectivity (Specifically, EN-DC).

The RRC processing unit 220 executes various processes in the radio resource control layer (RRC). Specifically, the RRC processing unit 220 can transmit and receive messages of the radio resource control layer.

The RRC processing unit 220 can receive the RRC Reconfiguration from the network, specifically, the E-UTRAN 20 (or NG RAN 30). The RRC processing unit 220 can transmit the RRC Reconfiguration Complete, which is a response to the RRC Reconfiguration, to the network. The RRC Reconfiguration may be interpreted as a type of reconfiguration message that reconfigures the RRC.

The DC processing unit 230 executes processing related to dual connectivity, specifically, MR-DC. As described above, in the present embodiment, the DC processing unit 230 may execute processing relating to EN-DC, but may correspond to NE-DC and/or NR-DC.

The DC processing unit 230 executes processing related to dual connectivity, specifically, Multi-RAT Dual Connectivity (MR-DC). The DC processing unit 230 accesses the eNB 100 A and the gNB 100 B, respectively, and can execute setting in a plurality of layers (Media access control layer (MAC), radio link control layer (RLC), and packet data convergence protocol layer (PDCP), etc.) including RRC.

Further, the DC processing unit 230 can transmit a report concerning the deactivation of the SCG. In this embodiment, the DC processing unit 230 may constitute a transmission unit for transmitting a report on deactivation.

The deactivation report may be interpreted broadly and may include the SCG activation or deactivation setting, an explicit or implicit indication of the active or de-active state, or a transition to that state.

The DC processing unit 230 can also transmit the failure information of the SCG to the network. Specifically, the DC processing unit 230 may transmit an SCG failure information message (or a new RRC message) via the RRC processing unit 220.

It should be noted that the DC processing unit 230 may realize the report (which may include SCG failure information) by signaling of an upper layer (For example, RRC) or by using a control element (MAC-CE) of a MAC. Alternatively, the DC processing unit 230 may realize the report by the signaling of the layer 1 (physical layer).

The DC processing unit 230 may transmit the failure information after the SCG transitions to the inactive state. After the transition of the SCG to the inactive state, it may be almost the same time as the transition of the SCG to the inactive state, or it may be within a predetermined time after the transition (it may be a time until the timer expires).

The control unit 240 controls each functional block constituting the UE 200. In particular, in the present embodiment, the control unit 240 can control the activation/de-activation of the SCG.

Specifically, when the DC processing unit 230 transmits a report concerning the deactivation of the SCG, the control unit 240 may cause the SCG to transition to the deactivation state. More specifically, the control unit 240 may send a report of the SCG deactivation (which may be approximately simultaneous), and may autonomously transition the SCG to an inactive state, or may transition the SCG to an inactive state within a predetermined time after the transition (which may be a time period until a timer expires).

Alternatively, if the SCG determines a failure, the control unit 240 may cause the SCG to transition to the inactive state regardless of the transmission of the above-mentioned failure information.

Specifically, when the transmission condition of the SCG failure information is satisfied, the control unit 240 may autonomously transition the SCG to the inactive state. That is, the control unit 240 may cause the SCG to transition to an inactive state before transmitting the failure information.

The control unit 240 may autonomously transition the SCG to an inactive state and then transmit the SCG failure information.

### (3)Operation of radio communication system

Next, the operation of radio communication system 10 will be described. Specifically, an operation related to the activation/deactivation of the secondary cell group (SCG) will be described.

### (3.1) Assumptions and issues

In the current 3GPP specification, if a radio link failure (RLF) occurs in the SCG during execution of the MR-DC, the UE 200 is required to report the SCG failure information message to the MN (see 3GPP TS 38.331, etc.).

The 3GPP specification does not specify the operation of the network side that reported the SCG failure information message, but it is assumed that SCG release (SCG release) or SN release (SN release) is performed.

In Release -17 of 3 GPP, expansion of MR-DC is being studied, and a function called SCG activation/deactivation is being studied with the main purpose of reducing power consumption of UE. As described above, the deactivation may be expressed as suspension.

The UE may suppress power consumption by stopping functions that are performed in an active state, for example, monitoring PDCCH, SRS transmission.

It is assumed that the SCG is configured in a high frequency band such as FR2 (Frequency Range 2: 24.25 GHz to 52.6 GHz). In such a case, it is assumed that the failure of the SCG occurs frequently because the beam direction deviates and the SCG is easily blocked by an obstacle even when the SCG is located near the center of the cell.

For example, in FR2, beam formation is required even on the UE side, but it can be interpreted that various disturbance factors such as flipping, rotating, changing the terminal support position of the UE (terminal), or setting the terminal on a table or directly holding the terminal affect the beam pattern, and the main lobe direction and gain change.

In such a scenario, it is assumed that the network frequently releases/adds SCGs (or SNs). However, if the network repeatedly releases and adds SCGs (or SNs) at such a high frequency, signaling (RRC (Connection) Reconfiguration Message) needs to be done to the UE, and there is a concern that the amount of signaling increases and a data conduction interruption occurs.

### (3.2) Example of operation

Hereinafter, an operation example which can solve the above-described problem will be described. Specifically, two operation examples, conditions for SCG deactivation, and an example of a report format for SCG deactivation will be described.

### (3.2.1) Operation Example 1

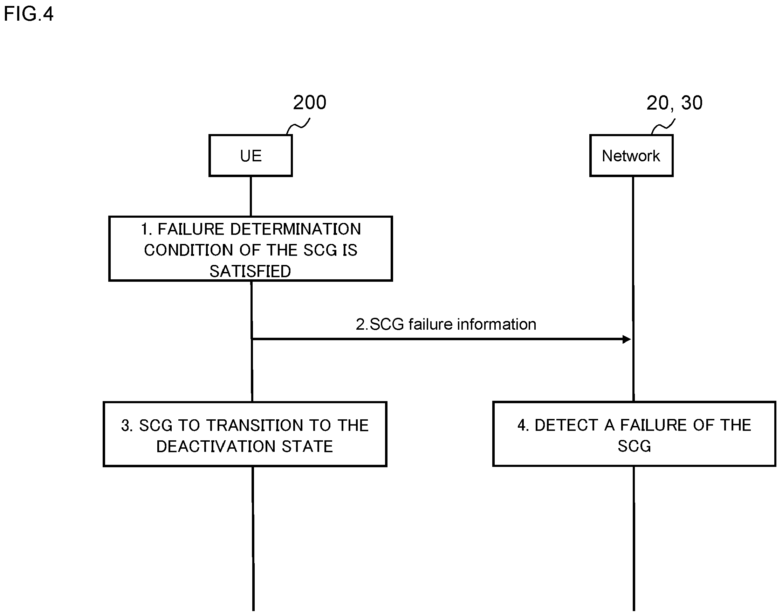

FIG. 4 shows a schematic communication sequence according to operation example 1. As shown in FIG. 4, when the failure determination condition of the SCG is satisfied, the UE 200 reports the SCG failure information message to the network (steps 1 and 2).

When the UE 200 reports the SCG failure information message to the network, it may cause the SCG to transition to the deactivation state (step 3). The network can also detect a failure of the SCG based on the received SCG failure information message (step 4).

The UE 200 may autonomously transition to the deactivation state after reporting the failure of the SCG to the network using the SCG failure information message, a new RRC message (described below), MAC-CE, or Layer 1 signaling.

As described above, the UE 200 may transmit a report (including an SCG failure information message) on the deactivation of the SCG (at approximately the same time), and may transition the SCG to an inactive state, or may transition the SCG to an inactive state within a predetermined time after the transition.

### (3.2.2) Example 2

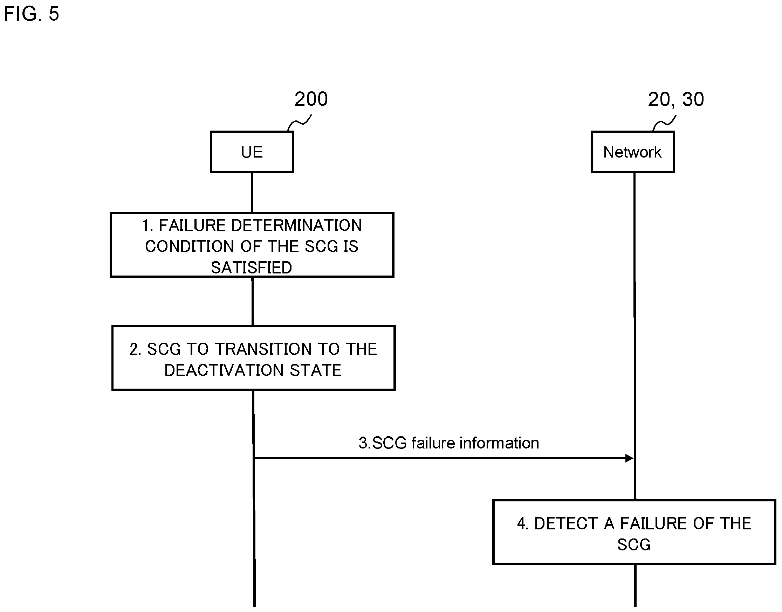

FIG. 5 shows a schematic communication sequence according to operation example 2. As shown in FIG. 5, when the failure determination condition of the SCG is satisfied, the UE 200 may change the SCG to the deactivation state (steps 1 and 2).

That is, the UE 200 may autonomously transition the SCG to the deactivation state when the transmission condition of the SCG failure information is satisfied.

The UE 200 may report the SCG failure information message to the network after transitioning the SCG to the deactivation state (step 3). The network can detect a failure of the SCG based on the received SCG failure information message (step 4).

The UE 200 may report a failure of the SCG to the network using an SCG failure information message, a new RRC message (described below), MAC-CE, or Layer 1 signaling as in Operation Example 1.

### (3.2.3) SCG Deactivation Conditions

In 3 GPP TS 38.331 v. 16.3. 1, the following contents are specified as the SCG failure cause, but in this embodiment, conditions specific to SCG deactivation may be added.

▪ t 310 - expiry
▪ t 312 - expiry
▪ t 304 - expiry
▪ If beamFailureRecoveryFailure has occurred:
   Note that the timer T 310 may be stopped upon detection of a problem in the physical layer of the Special Cell (SpCell), i.e., upon receipt of N 310 consecutive synchronous displays from the lower layer of the SpCell, upon receipt of N 311 consecutive synchronous displays from the lower layer of the SpCell, upon receipt of an RRCReconfiguration with reconfigurationWithSync for the cell group, upon receipt of a MobilityFromNRCommand, upon reconfiguration of the rlf-TimersAndConstant, upon initiation of the connection reestablishment procedure, upon initiation of the MCG failure information procedure, and upon SCG release.

Timer T 312 may be started if, during execution of T 310 in PCell, T 312 is configured and triggers a measurement report for a measurement ID with "use T312" set to true, if, during execution of T 310 in PSCell, T 312 is configured in SCG and "use T312" is set to true, if, T 312 is configured in MCG, T 312 is configured and triggers a measurement report for a measurement ID.

T 312 may also be stopped upon receipt of an N 311 continuous synchronization indication from a lower layer of the SpCell, upon receipt of an RRCReconfiguration in reconfigurationWithSync for the cell group in question and upon initiation of a connection reestablishment procedure, upon resetting rlf-TimersAndConstant, upon initiation of an MCG fault information procedure, and upon expiration of T 310 in the corresponding SpCell.

Timer T 304 may be started upon receipt of an RRCReconfiguration message containing reconfigurationWithSync, or upon performing a conditional reconfiguration, i.e., applying a stored RRCReconfiguration message containing reconfigurationWithSync, and stopped upon successful completion of random access at the corresponding SpCell.

### (3.2.4) Reporting format

Reporting on the deactivation of the SCG may be accomplished in one of the following forms:.

### ▪Enhancements to existing RRC messages (SCG failure information messages)

Specifically, at least one of "t 310 - Expiry - WithDeactivated", "t 312 - Expiry - WithDeactivated", "synchReconfig FailureSCGWithDeactivated", and "beamFailureRecoveryFailureRecoveryWithDeactivated" may be added to the failureType. These information elements (or fields) indicate the status with respect to the de-activated SCG, and each information element is already specified as being applicable to other than the de-activated SCG in 3 GPP TS 38.331, etc.

Further, the SCG failure information may be transmitted with at least one of the heat generation of the UE 200, the processing load or the remaining battery level as a trigger (details will be described later).

### ▪Defining a New RRC Message

Specifically, the UE for which the SCG activation/deactivation is configured may transmit newly created SCG Deactivated Information (tentative name) without transmitting the SCG failure information.

The configuration of SCG DeactivatedInformation is based on the SCG failure information, and the following SCG deactivation-specific causes may be added.

### ▪As failureType, "t 310 - Expiry - WithDeactivated", "t 312 - Expiry - WithDeactivated", "synchReconfig FailureSCGWithDeactivated", "beamFailureRecoveryFailureRecoveryWithDeactivated"

Further, the SCG Deactivated Information may be transmitted with at least one of the heat generation, the processing load, and the remaining battery of the UE 200 as a trigger (details will be described later).

The SCG Deactivated Information may define and report a new MAC CE or define and report a new Layer 1 signaling.

As described above, the UE 200 may send the SCG failure information or SCG Deactivated Information triggered by at least any of the heat generation, processing load, or battery level of the UE 200, in which case the UE 200 may send the SCG failure information or SCG Deactivated Information based on at least any of the following conditions or combinations:.
▪ When a certain threshold is exceeded and the UE 200 is determined to have overheated.
▪ When a certain threshold is exceeded and the UE 200 determines that it has overloaded.
▪ When it is determined that the battery level of the UE 200 has fallen below a certain threshold
▪ When it is determined that the number of applications launched in UE 200 has fallen below a certain threshold
▪ When the expected amount of data in consideration of the destination server and/or application falls below a certain threshold
▪ UL packets associated with a specific slice (S-NSSAI: Single-Network Slice Selection Assistance Information), protocol data unit (PDU) session (PDU session identity), data radio bearer (DRB) (DRB ID), or quality of service (QoS) flow (QFI do not occur for a period of time.
▪ DL packets associated with a particular slice (S-NSSAI), PDU session identity (PDU Session), DRB ID (DRB ID), or QoS flow (QFI) are not received for a period of time.

The "expected amount of data considering the destination server and/or application" may be, for example, "estimated amount of communication data to be generated" determined based on the Content-size of the HyperText Transfer Protocol (HTTP) header, the destination host, the Uniform Resource Locator (URL), and the like.

### (4)Operational effects

According to the embodiment described above, the following effects are obtained. Specifically, the UE 200 may transition the SCG to an inactive state if it transmits a report of SCG deactivation, which may include SCG failure information.

In addition, if the SCG determines that there is a failure, the UE 200 can transition the SCG to the inactive state regardless of the transmission of the failure information from the SCG. Furthermore, in this embodiment, the UE 200 may transmit the SCG failure information after transitioning the SCG to an inactive state.

Therefore, an operation such as the release of the SCG by the network using the RRC message can be avoided, and the amount of signaling can be suppressed. As a result, it is possible to reduce power consumption of the UE 200 and avoid the occurrence of a data conduction stop section. That is, according to radio communication system 10, even when the SCG activation/deactivation is applied, the amount of signaling can be suppressed, and power consumption reduction and reliability improvement can be realized.

### (5)Other Embodiments

Although the embodiment has been described above, it is obvious to those skilled in the art that various modifications and improvements are possible without being limited to the description of the embodiment.

For example, in the above embodiment, EN-DC in which MN is eNB and SN is gNB has been described as an example, but other DC may be used as described above. Specifically, it may be NR-DC where MN is gNB and SN is gNB, or NE-DC where MN is gNB and SN is eNB.

SCG deactivation may also be replaced by other terms of a similar meaning, such as deactivation, dormancy, and the like described above.

Further, the block configuration diagrams (FIGS. 2 and 3) used for the description of the above-described embodiment show blocks in units of functions. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions the transmission is called a transmission unit (transmitting unit) or a transmitter. As described above, there is no particular limitation on the method of implementation.

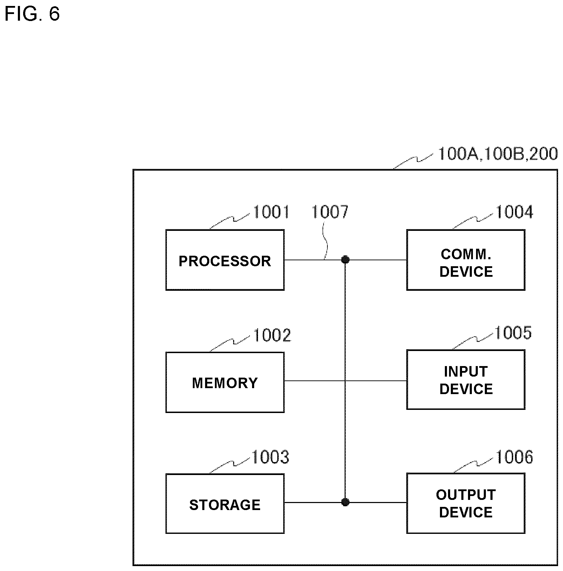

Further, the above-mentioned eNB 100 A, gNB 100 B and UE 200 (the apparatus) may function as a computer that performs processing of the radio communication method of the present disclosure. FIG. 6 is a diagram showing an example of a hardware configuration of the apparatus. As shown in FIG. 6, the device may be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see FIG. 2.3) is implemented by any hardware element or combination of hardware elements of the computer device.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001 operates, for example, an operating system to control the entire computer. Processor 1001 may comprise a central processing unit (CPU) including interfaces to peripheral devices, controllers, arithmetic units, registers, and the like.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, or the like. The memory 1002 may store programs (program codes), software modules, and the like that are capable of executing the method according to one embodiment of the present disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Devices such as the processor 1001 and the memory 1002 are connected by a bus 1007 for communicating information. The bus 1007 may be configured using a single bus or may be configured using different buses for each device.

In addition, the device may comprise hardware such as a microprocessor, a digital signal processor (DSP), an application specific integrated circuit (ASIC), a programmable logic device (PLD), a field programmable gate array (FPGA), and the hardware may implement some or all of each functional block. For example, the processor 1001 may be implemented by using at least one of these hardware.

Further, the notification of the information is not limited to the mode/embodiment described in the present disclosure, and other methods may be used. For example, notification of information may be performed by physical layer signaling (e.g., Downlink Control Information (DCI), Uplink Control Information (UCI), higher layer signaling (e.g., RRC signaling, Medium Access Control (MAC) signaling, broadcast information (Master Information Block (MIB), System Information Block (SIB)), other signals, or a combination thereof. The RRC signaling may also be referred to as an RRC message, for example, an RRC Connection Setup message, an RRC Connection Reconfiguration message, and the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, and the like of each aspect/embodiment described in the present disclosure may be changed in order as long as there is no contradiction. For example, the methods described in this disclosure use an exemplary sequence to present the elements of the various steps and are not limited to the particular sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each of the aspects/embodiments described in the present disclosure may be used alone, in combination, or switched over in accordance with implementation. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channel and the symbol may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile body may be a vehicle (For example, cars, planes, etc.), an unmanned mobile body (Drones, self-driving cars, etc.), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal). For example, each aspect/embodiment of the present disclosure may be applied to a configuration in which communication between a base station and a mobile station is replaced with communication between a plurality of mobile stations (For example, it may be called Device-to-Device (D2D), Vehicle-to-Everything (V2X), etc.). In this case, the mobile station may have the function of the base station. In addition, words such as "up" and "down" may be replaced with words corresponding to communication between terminals (For example, "side".). For example, terms an uplink channel, a downlink channel, or the like may be read as a side channel.
similarly, the mobile station in the present disclosure may be read as a base station. In this case, the base station may have the function of the mobile station. A radio frame may be composed of one or more frames in the time domain. Each frame or frames in the time domain may be referred to as a subframe. A subframe may be further configured by one or more slots in the time domain. The subframe may be a fixed time length (For example, 1 ms) independent of the numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in time units greater than the minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the sub-frame and TTI may be a sub-frame (1 ms) in the existing LTE, a period shorter than 1 ms (For example, 1 -13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. The number of slots (minislot number) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB based on the common reference point of the carrier. PRB may be defined in BWP and numbered within that BWP.

BWP may include UL BWP (UL BWP) and DL BWP (DL BWP). One or a plurality of BWPs may be set in one carrier for the UE.

At least one of the configured BWPs may be active, and the UE may not expect to send and receive certain signals/channels outside the active BWP. Note that "cell", "carrier", and the like in this disclosure may be read as "BWP".

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each apparatus may be replaced with "unit", "circuit", "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" or "decision" may include regarding some action as "judgment" or "decision". Moreover, "judgment (decision)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

- 10: radio communication system
- 20: E-UTRAN
- 30: NG RAN
- 40: UPF
- 100A: eNB
- 100B: gNB
- 110: radio communication unit
- 120: RRC processing unit
- 130: DC processing unit
- 140: control unit
- 200: UE
- 210: radio communication unit
- 220: RRC processing unit
- 230: DC processing unit
- 240: control unit
- 1001: processor
- 1002: memory
- 1003: storage
- 1004: communication device
- 1005: input device
- 1006: output device
- 1007: bus

## Claims

1. A terminal comprising:
a transmission unit that transmits a report related to deactivation of a secondary cell group; and
a control unit that, when the report is transmitted, causes the secondary cell group to transition to an inactive state.

2. A terminal comprising:
a transmission unit that transmits failure information of a secondary cell group; and
a control unit that, when the secondary cell group is determined to be a failure, causes the secondary cell group to transition to an inactive state regardless of the transmission of the failure information.

3. The terminal according to claim 2, wherein the transmission unit transmits the failure information after the secondary cell group transitions to the inactive state.

4. A radio communication method comprising the steps of:
transmitting, by a terminal, a report related to deactivation of a secondary cell group; and
transitioning, by the terminal, the secondary cell group to an inactive state when the terminal transmits the report.

5. A radio communication method comprising the steps of:
transmitting, by a terminal, failure information of a secondary cell group; and
causing, by the terminal, the secondary cell group to transition to an inactive state regardless of the transmission of the failure information when the terminal determines that the secondary cell group has failed.
